# EUROPÄISCHE PATENTSCHRIFT

(11) **EP 1 532 420 B1**
(45) Veröffentlichungstag und Bekanntmachung des Hinweises auf die Patenterteilung: **18.02.2009**
(21) Anmeldenummer: 03793682.0
(22) Anmeldetag: 04.08.2003
(51) Int. Cl.: G01B 5/255, G01B 5/00, G01B 7/315, G01B 11/275, G01B 21/26

(54) **HALTEEINRICHTUNG FÜR EINE ACHSMESSEINRICHTUNG**
RETAINING DEVICE FOR A WHEEL-ALIGNMENT ANALYSER
DISPOSITIF DE MAINTIEN POUR UN SYSTEME D'ALIGNEMENT DE ROUES

(30) Priorität: 13.08.2002 DE 10237647
(43) Veröffentlichungstag der Anmeldung: 25.05.2005
(73) Patentinhaber: Warkotsch, Horst, 30938 Kleinburgwedel (DE)
(72) Erfinder: WARKOTSCH, Horst, 30938 Kleinburgwedel (DE); OHNESORGE, Axel, 30938 Burgwedel (DE)
(74) Vertreter: Schleitzer, Dirk-Karsten
(86) Internationale Anmeldenummer: PCT/EP2003/008605
(87) Internationale Veröffentlichungsnummer: WO 2004/023066

(56) Entgegenhaltungen:
- DE-U- 8 907 578
- DE-U- 20 206 404
- FR-A- 2 393 271
- US-A- 4 185 917

## Beschreibung

Die Erfindung betrifft eine Halteeinrichtung für eine Achsmeßeinrichtung zur Befestigung an einem Rad eines Kraftfahrzeuges nach dem Oberbegriff des Anspruchs 1.

Um bei einer Achsvermessung an einem Kraftfahrzeug reproduzierbare Ergebnisse zu bekommen, muß die Halteeinrichtung für die Achsmeßeinrichtung exakt in der Mitte des Rades zentriert werden. Da es eine Vielzahl unterschiedlicher Fahrzeugfelgen gibt, die sich in der Form, dem Durchmesser und dem Material unterscheiden, gibt es entsprechend viele Halteeinrichtungen mit unterschiedlichsten Befestigungssystemen. So ist es beispielsweise bekannt, die Halteeinrichtung mittels Kammern, Magneten oder Domen an bestimmten Stellen des Rades zu befestigen, die geeignet sind, eine Bestimmung des Felgenzentrums zu ermöglichen.

Halteeinrichtungen für eine Achsmeßeinrichtung zur Befestigung an einem Rad eines Kraftfahrzeuges sind bereits aus der DE 202 06 404 U1, DE 79 22 976 U1 und US 3990666A bekannt. Diese Halteeinrichtungen halten jeweils einen Halter mit einer Mehrzahl von Haltearmen auf, wobei entlang den Haltearmen verstellbare Befestigungsmittel vorgesehen sind. Die Befestigungsmittel weisen endseitig einen Übergriffsbereich zum Übergreifen des Felgenrandes auf, wobei der Halter über die Befestigungsmittel am Felgenrand feststellbar ist. Nachteilig bei den bekannten Halteeinrichtungen ist, daß die vorhandenen Befestigungsmittel nicht ohne weiteres an unterschiedlichen Felgen befestigt werden können.

Aus der DE 38 15 559 A1 geht eine Halteeinrichtung für eine Achsmeßeinrichtung hervor, bei der die Befestigungsmittel in die Felgenschüssel eingreifen.

Aus der DE 198 53 579 A1 ist bereits eine Halteeinrichtung der eingangs genannten Art bekannt, bei der entlang den Haltearmen verstellbare Abstandshalter vorgesehen sind, die stirnseitig mit einem Magneten versehen sind, um vorderseitig an der Felge angesetzt zu werden. Nachteilig ist, daß diese bekannte Halteeinrichtung im Hinblick auf die magnetische Befestigung nicht für moderne Softline-Aluminiumfelgen geeignet ist.

Weiterhin ist aus der DE 89 07 578 U1 eine Halteeinrichtung mit den Merkmalen des Oberbegriffs des Anspruchs 1 bekannt.

Aufgabe der vorliegenden Erfindung ist es daher, eine Halteeinrichtung der eingangs genannten Art zu schaffen, die für alle gängigen Felgenformen eine Aufspann- und Zentrierlösung mit einer dauerhaften Befestigung bietet und eine korrekte Achsvermessung ermöglicht.

Die vorgenannte Aufgabe ist erfindungsgemäß dadurch gelöst, daß der Übergriffsbereich in Richtung auf das Rad verschieblich aus Abstandshalter gehalten und relativ zum Abstandshalter in axialer Richtung verschiebbar ist, so daß der Übergriffsbereich zum übergreifen des jeweiligen Felgenrandes an unterschiedliche Felgentypen angepaßt werden kann.

Die erfindungsgemäße Ausgestaltung mit relativ zum Übergriffsbereich festem Abstandshalter und darauf in Richtung auf das Rad verschieblichem Übergriffsbereich hat den Vorteil, daß die erfindungsgemäße Halteeinrichtung ohne weiteres an unterschiedliche Felgentypen angepaßt werden kann. Durch den Abstandshalter ist in jedem Falle sichergestellt, daß der Halter in einem exakt vorgegebenen Abstand zur Felge angeordnet wird. Der Übergriffsbereich kann zum Übergreifen des jeweiligen Felgenrandes an die jeweiligen Verhältnisse aufgrund seiner Verschieblichkeit gegenüber dem Abstandshalter angepaßt werden. Von besonderem Vorteil ist es in diesem Zusammenhang, daß der Übergriffsbereich in Richtung auf das Rad federbelastet ist, durch die Feder also stets automatisch in die optimale Position zum Übergreifen des Felgenrandes gedrückt wird.

Damit der Übergriffsbereich in einfacher Weise in den Spalt zwischen dem Felgenrand und dem Reifen eingesetzt werden kann, ist er abgeflacht und endseitig in Art einer Schneide ausgebildet, wobei die Flachseite des Übergriffsbereichs tangential zum Felgenrand verlaufen sollte.

Bei einer konstruktiv besonders einfachen Ausgestaltung ist der Abstandshalter als Bolzen ausgebildet, während der Übergriffsbereich an einer auf dem Bolzen gehaltenen Hülse vorgesehen ist.

Um Beschädigungen der Felge beim Ansetzen der Halteeinrichtung an das Rad zu vermeiden, weist der Abstandshalter eine abgerundete Tastspitze zur Anlage an der Felge auf. Durch die gerundete Ausbildung der Tastspitze ist eine zumindest punktuelle Anlage an der Felge im Bereich des Felgenrandes ohne Verkratzen der Felgenoberfläche möglich.

Bevorzugt ist es weiterhin, daß die Hülse unverlierbar am Abstandshalter gehalten ist, so daß ein Lösen der Hülse beim Ansetzen des Halters an die Felge oder aber ein unbeabsichtigter Verlust der Hülse ausgeschlossen werden kann. Durch die Sicherung der Hülse gegenüber Verdrehen auf dem Abstandshalter ist im übrigen sichergestellt, daß die Flachseite des Übergriffsbereichs stets richtig, daß heißt tangential zum Felgenrand verläuft, so daß die Flachseite des Übergriffsbereichs zum Verspannen flach auf den Felgenrand aufgelegt werden kann.

Zur Verspannung der Halteeinrichtung am Rad ist der Abstandshalter mit der Hülse und der Feder an einem längs des Haltearmes verschiebbaren Verschiebeteil befestigt, wobei das Verschiebeteil mit dem Abstandshalter eine verschiebbare Baueinheit und damit letztlich das Befestigungsmittel bildet, das in radialer Richtung - je nach Ausbildung des jeweiligen Haltearmes - entlang dem Haltearm verschoben und nach Anlage des Übergriffsbereichs auf den Felgenrand zur Verspannung der Halteeinrichtung festgestellt bzw. befestigt wird.

Konstruktiv läßt sich die vorgenannte Baueinheit in einfacher Weise dadurch ausbilden, daß die Feder als auf den Abstandshalter aufgeschobene Schraubenfeder ausgebildet ist, die mit ihrem einen Ende gegen das Verschiebeteil und mit ihrem anderen Ende gegen die Hülse anliegt.

Zur sicheren Befestigung des Abstandshalters am Verschiebeteil dient vorzugsweise eine einfache Verschraubung, wobei der Schraubenkopf in einer Einsenkung des Verschiebeteils aufgenommen sein sollte. Dabei sollte der Schraubenkopf nicht über das Verschiebeteil überstehen, um dadurch nicht die Verschiebung des Verschiebeteils längs des jeweiligen Haltearmes zu behindern. Die vorgenannte Einsenkung kann dabei sowohl als Rund- als auch als Langloch ausgebildet sein. Die Ausbildung als Langloch ermöglicht eine gewisse Verstellmöglichkeit des Abstandshalters im Verschiebeteil.

Zur Gewährleistung der Längsbewegung in radialer Richtung in bezug auf die Felge entlang des jeweiligen Haltearmes ist das Verschiebeteil in einer langgestreckten, dem Rad zugewandten Führung des Haltearmes aufgenommen. Die Führung sollte dabei derart ausgebildet sein, daß sich eine im wesentlichen spielfreie Aufnahme des Verschiebeteils quer zur Verschieberichtung ergibt.

Auf der dem Rad abgewandten Seite des Haltearmes ist im Bereich der Führung ein Langloch vorgesehen, über das das Verschiebeteil über eine Schraubverbindung von außen feststellbar ist. Zur Feststellung des Verschiebeteils dient dabei vorzugsweise ein Drehknauf zur Handbetätigung.

Im Ergebnis wird durch die Erfindung eine Halteeinrichtung zur Verfügung gestellt, bei der eine einfache Befestigung und Zentrierung durch Übergreifen des Felgenrandes und Verspannen der Befestigungsmittel mit wenigen Handgriffen erfolgen kann.

Bevorzugte Ausgestaltungen ergeben sich aus der nachfolgenden Beschreibung von Ausführungsbeispielen. Dabei zeigt:
- Fig. 1: eine perspektivische Darstellung einer an ein Rad angesetzten Achs- meßeinrichtung,

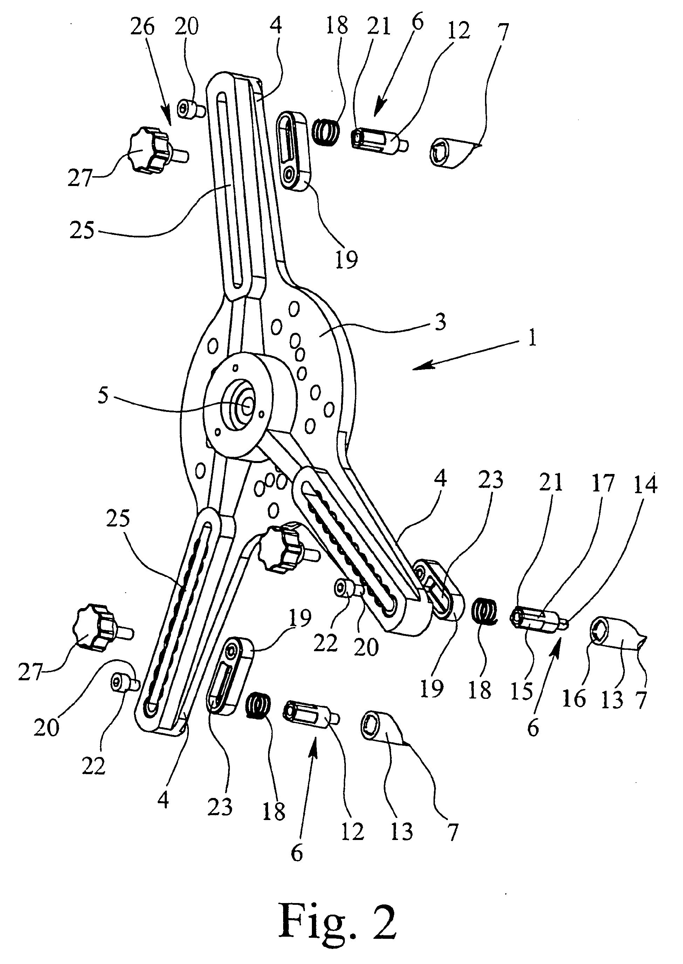

- Fig. 2: ein perspektivische Explosionsdarstellung der Halteeinrichtung aus Fig. 1,
- Fig. 3: eine perspektivische Explosionsdarstellung eines Teils eines Befesti- gungsmittels einer erfindungsgemäßen Halteeinrichtung,
- Fig. 4: eine Schnittdarstellung eines Teils einer an ein Rad angesetzten Halte- einrichtung,
- Fig. 5: eine vergrößerte Darstellung des Details V aus Fig. 4,
- Fig. 6: eine der Fig. 5 entsprechende Darstellung der an ein anderes Rad ange- setzten Halteeinrichtung und
- Fig. 7: eine der Fig. 5 entsprechende Darstellung der an ein weiteres Rad ange- setzten Halteeinrichtung.

In den einzelnen Figuren ist eine Halteeinrichtung 1 für eine im einzelnen nicht dargestellte Achsmeßeinrichtung zur Befestigung an einem Rad 2 eines Kraftfahrzeuges dargestellt. Die Halteeinrichtung 1 weist einen Halter 3 auf, der vorliegend drei Haltearme 4 aufweist. Es versteht sich, daß statt dreier Haltearme 4 auch eine Mehrzahl von Haltearmen vorgesehen sein kann. Zur Befestigung der nicht dargestellten Achsmeßeinrichtung dient eine mittige Öffnung 5 im Halter 3. An jedem der Haltearme 4 ist jeweils ein Befestigungsmittel 6 vorgesehen, das entlang den Haltearmen 4 in radialer Richtung manuell verstellbar ist.

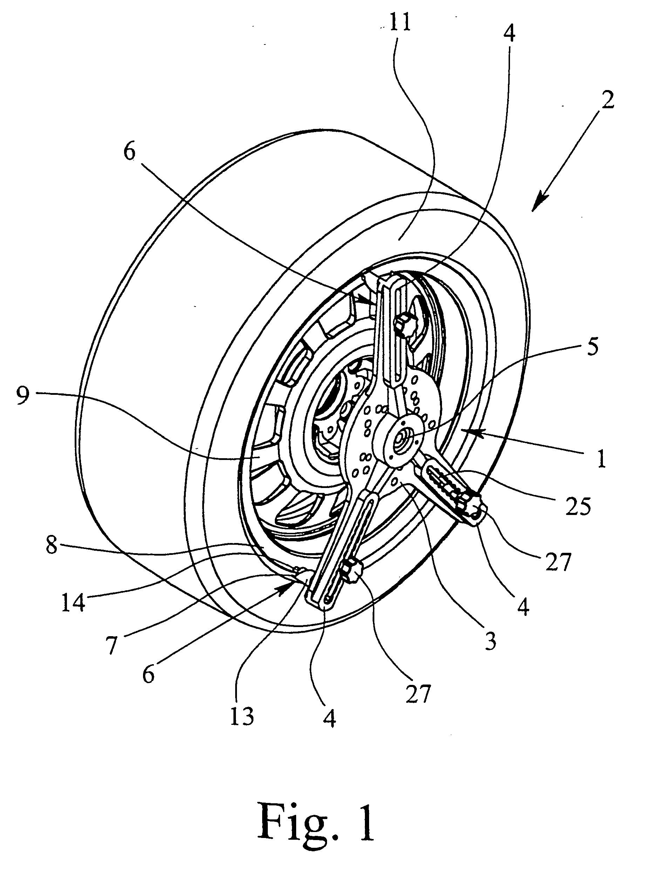

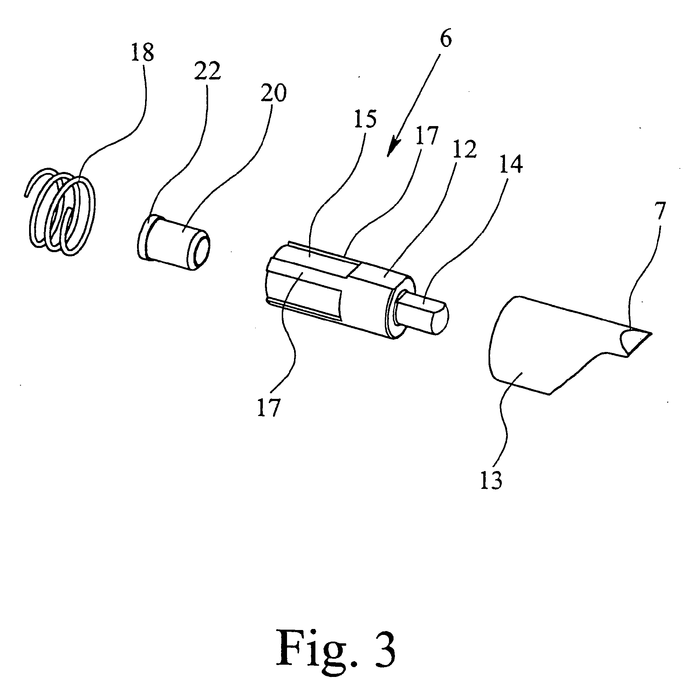

Vorgesehen ist nun, daß die Befestigungsmittel 6 endseitig einen Übergriffsbereich 7 zum Übergreifen des Felgenrandes 8 der Felge 9 aufweisen, wobei der Halter 3 über die Befestigungsmittel 6 am Felgenrand 8 verspannbar bzw. zu befestigen ist. Wie sich beispielsweise aus Fig. 3 ergibt, ist der Übergriffsbereich 7 abgeflacht und endseitig in Art einer Schneide ausgebildet, so daß der Übergriffsbereich in einfacher Weise in den Spalt 10 zwischen dem Felgenrand 8 und dem Reifen 11 eingesetzt werden kann. Im Befestigungszustand, der in Fig. 1 dargestellt ist, ist die Flachseite des Übergriffsbereich 7 tangential zum Felgenrand 8 ausgebildet. Vorliegend ist unter tangential nicht nur die punktförmige sondern auch eine flächige Anlage aufgrund einer bogenförmigen Ausbildung des Übergriffbereichs 7 gemeint, wobei der Übergriffsbereich 7 flach auf dem Felgenrand 8 aufliegt.

Obwohl es grundsätzlich möglich wäre, daß der Übergriffsbereich 7 in axialer Richtung fest relativ zum Halter 3 ist (diese Bauart wäre außerhalb der im Anspruch 1 definierten Erfindung) ist bei der dargestellten Ausführungsform der Übergriffsbereich 7 in Achsrichtung X verschieblich an einem am Haltearm 4 befestigten Abstandshalter 12 gehalten. Dabei ist der Übergriffsbereich 7 in Richtung auf das Rad 2 federbelastet. Der Abstandshalter 12 selbst ist als Bolzen ausgebildet, während der Übergriffsbereich 7 an einer auf dem Bolzen gehaltenen Hülse 13 vorgesehen ist. Der Abstandshalter 12 weist endseitig eine abgerundete Tastspitze 14 auf, die im Befestigungszustand an der Felge 9 im Bereich des Felgenrandes 8 anliegt. Die Hülse 13 selbst ist unverlierbar am Abstandshalter 12 gehalten. Des weiteren ist die Hülse 13 gegen Verdrehen auf dem Abstandshalter 12 gesichert. Zur unverlierbaren Halterung weist der Abstandshalter 12 wenigstens eine Nut 15 auf, an deren Ende die Hülse 13 mit einem Anschlag 16 anschlägt. Seitlich ist die Nut 15 von Vorsprüngen 17 begrenzt, zwischen denen der Anschlag 16 im wesentlichen spielfrei angeordnet ist. Die Vorsprünge 17 und die Nuten 15 bilden letztlich eine Führung und verhindern damit ein Drehen der Hülse 13 auf dem Abstandshalter 12.

Der Abstandshalter 12 ist mit der Hülse 13 und der Feder 18 an einem Verschiebeteil 19 befestigt, das längs des Haltearmes 4 und damit in radialer Richtung verschiebbar ist. Das Verschiebeteil 19 bildet dabei mit dem Abstandshalter 12 und den weiteren daran befestigten Bauteilen eine längs des jeweiligen Haltearmes 4 verschiebbare Baueinheit und stellt damit letztlich das Befestigungsmittel 6 dar. Die Feder 18 ist vorliegend als auf den Abstandshalter 12 aufgeschobene Schraubenfeder ausgebildet, die mit ihrem einen Ende gegen das Verschiebeteil 19 mit ihrem anderen Ende gegen die untere Stirnkante der Hülse 13 anliegt, wenngleich dies nicht in allen Ausführungsformen dargestellt ist. Die Ausbildung der Feder 18 ist derart, daß die Hülse 13 so weit in Richtung auf das Rad 2 geschoben wird, bis der Anschlag 16 am Ende der Nut 15 anschlägt.

Die Befestigung des Abstandshalters 12 mit dem Verschiebeteil 19 erfolgt über eine Schraubverbindung. Hierzu dient einerseits eine Schraube 20, die in eine Gewindeöffnung 21 im Abstandshalter 12 eingeschraubt ist. Der Schraubenkopf 22 der Schraube 20 ist dabei in einer Einsenkung 23 des Verschiebeteils 19 aufgenommen und steht nicht über das Verschiebeteil 20 über. Hierdurch ist gewährleistet, daß die Verschiebung des Verschiebeteils 19 längs des Haltearmes 4 nicht behindert wird. Vorliegend ist die Einsenkung 23 als Langloch ausgebildet.

Das Verschiebeteil 19 selbst ist in einer langgestreckten, dem Rad 2 zugewandten Führung 24 am Haltearm 4 aufgenommen. Die Breite der Führung entspricht dabei im wesentlichen der Breite des Verschiebeteils, so daß sich eine spielfreie Aufnahme quer zur Verschieberichtung ergibt. Auf der dem Rad 2 abgewandten Seite des Halters 3 geht die Führung 24 in ein Langloch 25 über, wobei das Verschiebeteil 19 über eine Schraubverbindung 26 feststellbar ist, wenn der Übergriffsbereich 7 auf dem Felgenrand 8 aufliegt. Im einzelnen ist zur Feststellung des Verschiebeteils 19 ein Drehknauf 27 zur Handbetätigung vorgesehen.

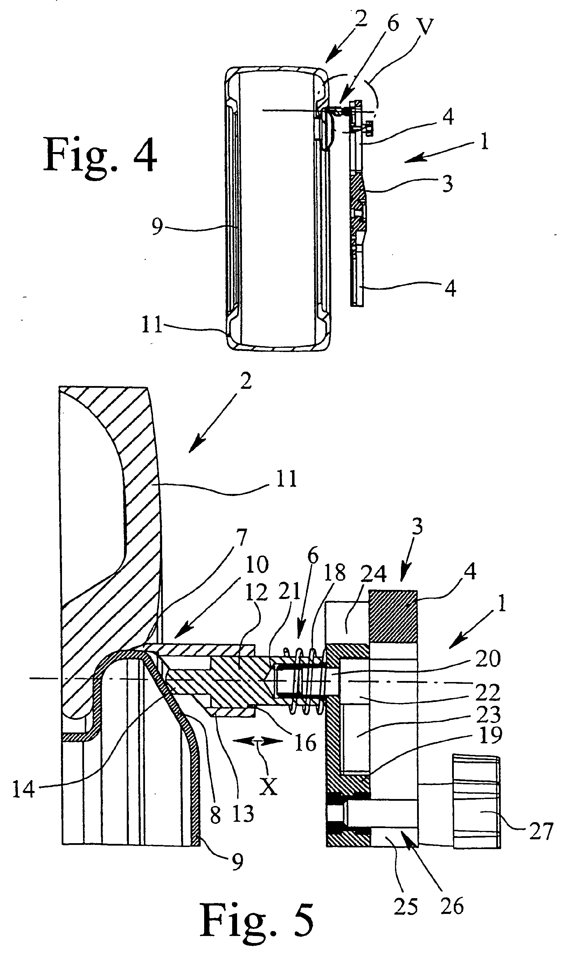

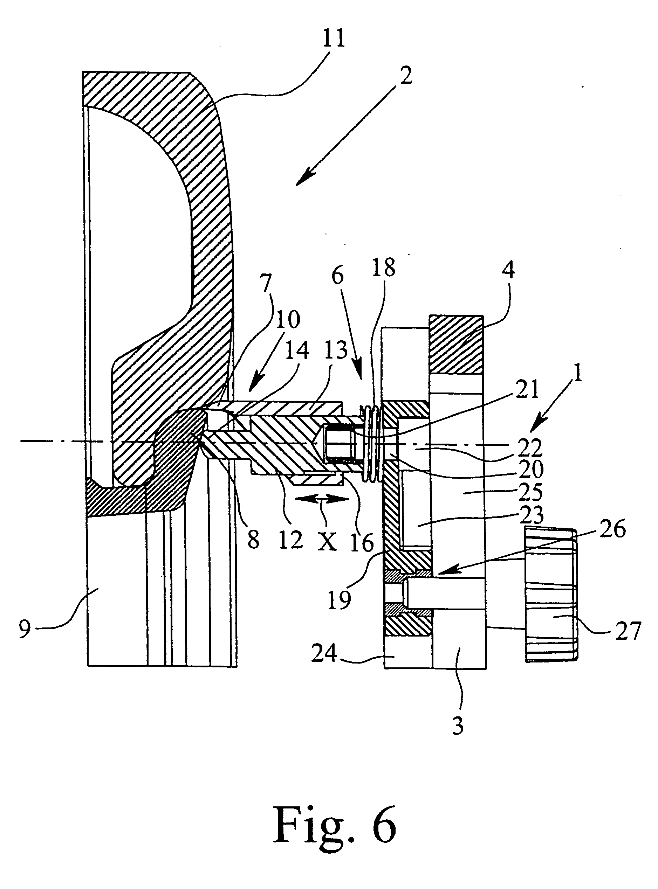

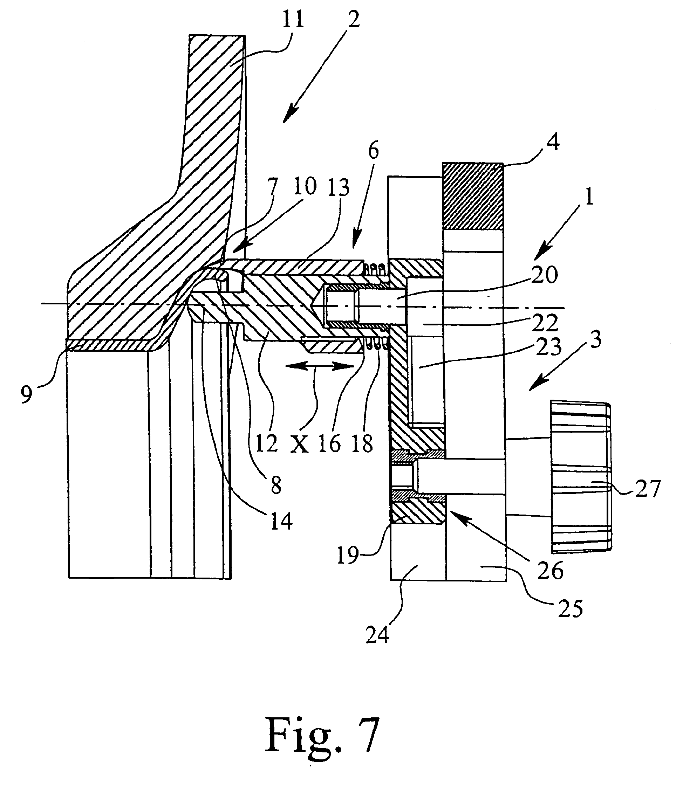

Die Fig. 5, 6 und 7 unterscheiden sich dahingehend, daß in Fig. 5 die Befestigung der Halteeinrichtung 1 an einer sogenannten Softline-Felge dargestellt ist, während in Fig. 6 die Befestigung an einer Standard-Aluminiumfelge gezeigt ist. Fig. 7 ist hingegen die Befestigung der Halteeinrichtung 1 an einer üblichen Stahlfelge gezeigt.

Wie sich aus einem Vergleich insbesondere der Fig. 5, 6 und 7 ergibt, sind die Tastspitze 14 und der Übergriffsbereich 7 derart ausgebildet, daß der Übergriffsbereich 7 im maximal ausgeschobenen Zustand mit seinem Ende über die Tastspitze 14 hinaussteht, wie dies in Fig. 5 dargestellt ist, während das Ende des Übergriffsbereichs 7 im maximal eingeschobenen Zustand gegenüber der Tastspitze 14 zurückgesetzt ist, wie dies in Fig. 7 dargestellt ist. Zwischen diesen beiden Zuständen ist jede andere Stellung möglich.

Die Befestigung der erfindungsgemäßen Halteeinrichtung erfolgt nun derart, daß zunächst die Befestigungsmittel 6 in radialer Richtung entsprechend dem jeweiligen Felgendurchmesser angeordnet werden. Anschließend wird der Halter 3 gegen die Felge 9 positioniert. Dabei liegen dann die Abstandshalter 12 mit ihrem jeweiligen Tastspitzen 14 gegen die Vorderseite der Felge 9 an. Gleichzeitig wird der jeweilige Felgenrand 8 vom Übergriffsbereich 7 übergriffen. Das Übergreifen erfolgt im Hinblick auf die Belastung durch die Feder 18 automatisch. Anschließend kann die Befestigung der Befestigungsmittel 6 über den jeweiligen Drehknauf 27 erfolgen. Beim Festdrehen des Drehknaufs 27 wird gleichzeitig manuell eine Kraft in radialer Richtung zur Öffnung 5 hin ausgeübt, so daß sich eine feste Anlage des jeweiligen Übergriffsbereichs 7 am Felgenrand 8 ergibt. Nach Befestigung aller Befestigungsmittel 6 ist die Halteeinrichtung 1 an dem Rad verspannt.

## Patentansprüche

1. Halteeinrichtung (1) für eine Achsmeßeinrichtung zur Befestigung an einem Rad (2) eines Kraftfahrzeuges, mit einem wenigstens drei Haltearme (4) aufweisenden Halter (3) und entlang den Haltearmen (4) verstellbaren Befestigungsmitteln (6), wobei der Halter (3) über die Befestigungsmittel (6) am Felgenrand (8) feststellbar ist, wobei die Befestigungsmittel (6) endseitig jeweils einen Übergriffsbereich (7) zum Übergreifen des Felgenrandes (8) und einen Abstandshalter (12) aufweisen und der Übergriffsbereich (7) in Richtung auf das Rad (2) federbelastet ist, **dadurch gekennzeichnet, daß** der Übergriffsbereich (7) in Richtung auf das Rad (2) verschieblich am Abstandshalter (12) gehalten und relativ zum Abstandshalter (12) in axialer Richtung (X) verschiebbar ist, so daß der Übergriffsbereich (7) zum Übergreifen des jeweiligen Felgenrandes (8) an unterschiedliche Felgentypen angepaßt werden kann.

2. Halteeinrichtung nach Anspruch 1, **dadurch gekennzeichnet, daß** der Übergriffsbereich (7) abgeflacht ist und endseitig in Art einer Schneide ausgebildet ist und daß, vorzugsweise, die Flachseite des Übergriffsbereichs (7) im Befestigungszustand tangential zum Felgenrand (8) verläuft.

3. Halteeinrichtung nach Anspruch 1 oder 2, **dadurch gekennzeichnet, daß** der Abstandshalter (12) als Bolzen ausgebildet ist und das der Übergriffsbereich (7) an einer auf dem Bolzen gehaltenen Hülse (13) vorgesehen ist.

4. Halteeinrichtung nach einem der vorhergehenden Ansprüche, **dadurch gekennzeichnet, daß** der Abstandshalter (12) endseitig eine abgerundete Tastspitze (14) zur Anlage an die Felge (9) aufweist.

5. Halteeinrichtung nach Anspruch 3 oder 4, **dadurch gekennzeichnet, daß** die Hülse (13) unverlierbar am Abstandshalter (12) gehalten ist und daß, vorzugsweise, die Hülse (13) gegen Verdrehen auf dem Abstandshalter (12) gesichert ist.

6. Halteeinrichtung nach Anspruch 3 oder 5 **dadurch gekennzeichnet, daß** der Abstandshalter (12) mit der Hülse (13) und einer Feder (18) an einem längs des Haltearmes (4) verschiebbaren Verschiebeteils (19) befestigt ist, wobei das Verschiebeteil (19) mit dem Abstandshalter (12) eine verschiebbare Baueinheit bildet.

7. Halteeinrichtung nach Anspruch 5 oder 6, **dadurch gekennzeichnet, daß** die Feder (18) als auf den Abstandshalter (12) aufgeschobene Schraubenfeder ausgebildet ist, die mit ihrem einen Ende gegen das Verschiebeteil (19) und mit ihrem anderen Ende gegen die Hülse (13) anliegt,

8. Halteeinrichtung nach Anspruch 6 oder 7, **dadurch gekennzeichnet, daß** der Abstandshalter (12) mit dem Verschiebeteil (19) verschraubt ist und daß der Schraubenkopf (22) in einer vorzugsweise als Langloch ausgebildeten Einsenkung (23) des Verschiebeteils (19) aufgenommen ist und nicht über das Verschiebeteil (19) übersteht.

9. Halteeinrichtung nach einem der Ansprüche 6 bis 8, **dadurch gekennzeichnet, daß** das Verschiebeteil (19) in einer langgestreckten, dem Rad (2) zugewandten Führung (24) am Haltearm (4) geführt ist und daß, vorzugsweise, die Führung (24) auf der dem Rad abgewandten Seite in ein Langloch (25) übergeht.

10. Halteeinrichtung nach einem der Ansprüche 6 bis 9, **dadurch gekennzeichnet, daß** das Verschiebeteil (19) über eine Schraubverbindung (26) am Haltearm (4) feststellbar ist und daß, vorzugsweise, zur Feststellung des Verschiebeteils (19) ein Drehknauf (27) zur Handbetätigung vorgesehen ist.

## Claims

1. Retaining device (1) for a wheel-alignment analyser for fastening to a wheel (2) of a vehicle, having a retainer (3) which has at least three retaining arms (4) and having fastening means (6) which are adjustable along the retaining arms (4), with it being possible for the retainer (3) to be fixed to the wheel-rim edge (8) via the fastening means (6), with the fastening means (6) having, at the end side, in each case one overlap region (7) for overlapping the wheel-rim edge (8) and a spacer (12), and with the overlap region (7) being spring-loaded in the direction of the wheel (2), **characterized in that** the overlap region (7) is held on the spacer (12) so as to be slidable in the direction of the wheel (2) and is slidable in the axial direction (x) relative to the spacer (12), such that the overlap region (7) for overlapping the respective wheel-rim edge (8) can be adapted to different wheel-rim types.

2. Retaining device according to Claim 1, **characterized in that** the overlap region (7) is flattened and is formed at the end side in the manner of a cutting edge, and **in that**, preferably, the flat side of the overlap region (7) runs tangentially with respect to the wheel-rim edge (8) in the fastened state.

3. Retaining device according to Claim 1 or 2, **characterized in that** the spacer (12) is formed as a bolt (12) and **in that** the overlap region (7) is provided on a sleeve (13) which is held on the bolt.

4. Retaining device according to one of the preceding claims, **characterized in that** the spacer (12) has, at the end side, a rounded sensing tip (14) for contact against the wheel rim (9).

5. Retaining device according to Claim 3 or 4, **characterized in that** the sleeve (13) is captively held on the spacer (12) and **in that** the sleeve (13) is preferably secured on the spacer (12) so as to be prevented from turning.

6. Retaining device according to Claim 3 or 5, **characterized in that** the spacer (12) is fastened with the sleeve (13) and a spring (18) to a sliding part (19) which is slidable along the retaining arm (4), with the sliding part (19) forming a slidable structural unit with the spacer (12).

7. Retaining device according to Claim 5 or 6, **characterized in that** the spring (18) is formed as a coil spring which is pushed onto the spacer (12), which coil spring bears with its one end against the sliding part (18) and with its other end against the sleeve (13).

8. Retaining device according to Claim 6 or 7, **characterized in that** the spacer (12) is screwed to the sliding part (19) and **in that** the screw head (22) is received in an indentation (23), which is preferably formed as a slot, of the sliding part (19) and does not protrude beyond the sliding part (19).

9. Retaining device according to one of Claims 6 to 8, **characterized in that** the sliding part (19) is guided in an elongate guide (24), which faces towards the wheel (2), on the retaining arm (4) and **in that** the guide (24) preferably merges, on the side facing away from the wheel, into a slot (25).

10. Retaining device according to one of Claims 6 to 9, **characterized in that** the sliding part (19) can be fixed to the retaining arm (4) by means of a screw connection (26) and **in that** a rotary knob (27) for manual actuation is preferably provided for fixing the sliding part (19).

## Revendications

1. Dispositif de maintien (1) pour un système d'alignement de roues à fixer à une roue (2) d'un véhicule automobile, avec un support (3) comportant au moins trois bras de support (4) et des moyens de fixation (6) mobiles le long des bras de support (4), le support (3) pouvant être fixé au rebord de jante (8) par l'intermédiaire des moyens de fixation (6), les moyens de fixation (6) comportant respectivement côté terminal une zone d'agrippement (7) pour agripper le rebord de jante (8) et un support d'écartement (12) et la zone d'agrippement (7) étant chargée par ressort en direction de la roue (2), **caractérisé en ce que** la zone d'agrippement (7) est maintenue mobile contre le support d'écartement (12) en direction de la roue (2) et mobile dans la direction axiale (X) par rapport au support d'écartement (12), de sorte que la zone d'agrippement (7) puisse être adaptée à différents types de jantes pour agripper le rebord de jante (8) respectif.

2. Dispositif de maintien selon la revendication 1, **caractérisé en ce que** la zone d'agrippement (7) est aplatie et est réalisée sous la forme d'une entaille côté terminal et **en ce que**, de préférence, la surface plate de la zone d'agrippement (7) s'étend tangentiellement par rapport au rebord de jante (8) à l'état fixé.

3. Dispositif de maintien selon la revendication 1 ou 2, **caractérisé en ce que** le support d'écartement (12) prend la forme d'un boulon et **en ce que** la zone d'agrippement (7) est prévue sur une douille (13) maintenue sur le boulon.

4. Dispositif de maintien selon l'une quelconque des revendications précédentes, **caractérisé en ce que** le support d'écartement (12) comporte côté terminal une pointe (14) arrondie pour l'installation contre la jante (9).

5. Dispositif de maintien selon la revendication 3 ou 4, **caractérisé en ce que** la douille (13) est maintenue au niveau du support d'écartement (12) de façon à empêcher toute perte et **en ce que**, de préférence, la douille (13) est sécurisée contre la torsion sur le support d'écartement (12).

6. Dispositif de maintien selon la revendication 3 ou 5, **caractérisé en ce que** le support d'écartement (12) est fixé à la douille (13) et à un ressort (18) au niveau d'une partie mobile (19) pouvant être déplacée le long du bras de support (4), la partie mobile (19) formant avec le support d'écartement (12) une unité de construction mobile.

7. Dispositif de maintien selon la revendication 5 ou 6, **caractérisé en ce que** le ressort (18) prend la forme d'un ressort à vis glissant sur le support d'écartement (12), ledit ressort reposant avec une de ses extrémités contre la partie mobile (19) et avec l'autre extrémité contre la douille (13).

8. Dispositif de maintien selon la revendication 6 ou 7, **caractérisé en ce que** le support d'écartement (12) est vissé à la partie mobile (19) et **en ce que** la tête de vis (22) est logée dans un renfoncement (23) de la partie mobile (19) prenant de préférence la forme d'un trou oblong et ne saillant pas au-delà de la partie mobile (19).

9. Dispositif de maintien selon l'une quelconque des revendications 6 à 8, **caractérisé en ce que** la partie mobile (19) est guidée au niveau du bras de support (4) dans un guide (24) longitudinal orienté vers la roue (2) et **en ce que**, de préférence, le guide (24) se transforme en un trou oblong (25) sur le côté opposé à la roue.

10. Dispositif de maintien selon l'une quelconque des revendications 6 à 9, **caractérisé en ce que** la partie mobile (19) peut être fixée au bras de support (4) par l'intermédiaire d'un assemblage vissé (26) et **en ce que**, de préférence, un système d'ouverture à cylindre (27) actionnable à la main est prévu pour maintenir en place la partie mobile (19).
